# EUROPEAN PATENT SPECIFICATION

(11) **EP 1 817 373 B1**
(45) Date of publication and mention of the grant of the patent: **29.06.2011**
(21) Application number: 05780579.8
(22) Date of filing: 19.08.2005
(51) Int. Cl.: C08K 7/00, C08L 23/00, C08J 5/18

(54) **ARTICLE HAVING BARRIER PROPERTY**
ARTIKEL MIT BARRIEREEIGENSCHAFT
ARTICLE COMPORTANT UNE PROPRIETE BARRIERE

(30) Priority: 03.12.2004 KR 20040101105; 02.06.2005 KR 20050047117
(43) Date of publication of application: 15.08.2007
(73) Proprietor: LG Chem. Ltd., Seoul 150-721 (KR)
(72) Inventor: KIM, Myung-Ho, 107-903 Samsung Hanul Apt., Daejeon-city 305-707 (KR); KIM, Minki, 5-104 LG Company Housing, 386-1, Daejeon-city 305-340 (KR); KIM, Sehyun, 107-303 Samsung Nareumae Apt. 55, Daejeon-city 302-726 (KR); OH, Youngtock, 2-101 LG Company Housing, 386-1, Daejeon-city 305-340 (KR); SHIN, Jaeyong, Daejeon-city 302-852 (KR); YANG, Youngchul, Daejeon-city 305-340 (KR)
(74) Representative: Goddar, Heinz J.
(86) International application number: PCT/KR2005/002729
(87) International publication number: WO 2006/059835

(56) References cited:
- EP-A1- 1 193 290
- EP-A1- 1 460 109
- WO-A-03/055792
- WO-A1-2004/005388
- WO-A1-2004/085534
- US-A1- 2004 106 719
- US-B1- 6 225 394
- US-B1- 6 414 070

## Description

### Technical Field

The present invention relates to an article having barrier properties, in which a nanocomposite of an intercalated clay and a resin having barrier properties is dispersed in a polyolefin resin matrix in a specific form.

### Background Art

General-purpose resins, such as polyethylene and polypropylene, are used in many fields due to their superior moldability, mechanical properties, and moisture barrier properties. However, these resins are limited in their use in packaging or containers for agrochemicals and foods, which require superior chemical and oxygen barrier properties. Therefore, general-purpose resins are used for packaging or containers for such materials with other resins as multiple layers by co-extrusion, lamination, coating, etc.

An ethylene-vinyl alcohol (EVOH) copolymer and polyamide resins are used for multi-layered plastic products due to their transparency and good gas barrier properties. However, because an ethylene-vinyl alcohol copolymer and polyamide resins are more expensive than general-purpose resins, a resin composition having good barrier properties even when small amounts of these resins are used is required.

Meanwhile, when a nano-sized intercalated clay is mixed with a polymer compound to form a fully exfoliated, partially exfoliated, intercalated, or partially intercalated nanocomposite, it has improved barrier properties due to its morphology. Thus, an article having barrier properties using such a nanocomposite is emerging.

It is important for the nanocomposite to maintain its fully exfoliated, partially exfoliated, intercalated, or partially intercalated morphology even after being molded and fully exfoliated morphology is advantageous in the improvement of barrier properties. In particular, when a molded article is prepared from a composition of the nanocomposite and a matrix polymer, the morphology of the nanocomposite dispersed in the matrix polymer is also important to improve barrier properties.

### Disclosure of Invention

### Technical Problem

The present invention provides an article having superior mechanical strength and superior oxygen, organic solvent, and moisture barrier properties, in which a nanocomposite maintains exfoliated morphology even after being molded and is dispersed in a matrix polymer in a specific form.

### Technical Solution

According to an aspect of the present invention, there is provided an article having barrier properties prepared from a dry-blended composition including: 40 to 98 parts by weight of a polyolefin resin; 0.5 to 60 parts by weight of a nanocomposite having barrier properties, including a polyamide and an intercalated clay; and 1 to 30 parts by weight of a compatibilizer, wherein the nanocomposite is dispersed in the polyolefin resin in a multiple lamella form.

In an embodiment of the present invention, the article haying barrier properties may be a pipe, a container, a sheet, a film, etc. and may be prepared in a single layer or multi layer form.

In another embodiment of the present invention, the polyolefin resin may be at least one compound selected from the group consisting of a high density polyethylene (HDPE), a low density polyethylene (LDPE), a linear low density polyethylene (LLDPE), an ethylene-propylene copolymer, metallocene polyethylene, and polypropylene. The polypropylene may be at least one compound selected from the group consisting of a homopolymer of propylene, a copolymer of propylene, metallocene polypropylene and a composite resin having improved physical properties by adding talc, flame retardant, etc. to a homopolymer or copolymer of propylene.

In the present invention, the nanocomposite having barrier properties is prepared by mixing an intercalated clay with a polyamide. The prepared nanocomposite has fully exfoliated, partially exfoliated, intercalated, or partially intercalated morphology.

In another embodiment of the present invention, the intercalated clay may be at least one material selected from the group consisting of montmorillonite, bentonite, kaolinite, mica, hectorite, fluorohectorite, saponite, beidelite, nontronite, stevensite, vermiculite, hallosite, volkonskoite, suconite, magadite, and kenyalite.

In another embodiment of the present invention, the polyamide may be nylon 4.6, nylon 6, nylon 6.6, nylon 6.10, nylon 7, nylon 8, nylon 9, nylon 11, nylon 12, nylon 46, MXD6, amorphous polyamide, a copolymerized polyamide containing at least two of these, or a mixture of at least two of these.

In another embodiment of the present invention, the ionomer may have a melt index of 0.1 to 10 g/10 min (190°C, 2,160g).

In another embodiment of the present invention, the compatibilizer may be at least one compound selected from an ethylene-ethylene anhydride-acrylic acid copolymer, an ethylene-ethyl acrylate copolymer, an ethylene-alkyl acrylate-acrylic acid copolymer, a maleic anhydride modified (graft) high-density polyethylene, a maleic anhydride modified (graft) linear low-density polyethylene, an ethylene-alkyl (meth)acrylate-(meth)acrylic acid copolymer, an ethylene-butyl acrylate copolymer, an ethylene-vinyl acetate copolymer, a maleic anhydride modified (graft) ethylene-vinyl acetate copolymer.

The present invention will now be explained in more detail.

An article having barrier properties according to another embodiment of the present invention is prepared from a dry-blended composition including: 40 to 98 parts by weight of a polyolefin resin; 0.5 to 60 parts by weight of a nanocomposite having barrier properties, including a polyamide and an intercalated clay; and 1 to 30 parts by weight of a compatibilizer, wherein the nanocomposite is dispersed in the polyolefin resin in a multiple lamella form.

The polyolefin resin may include at least one compound selected from the group consisting of a high density polyethylene (HDPE), a low density polyethylene (LDPE), a linear low density polyethylene (LLDPE), an ethylene-propylene copolymer, metallocene polyethylene, and polypropylene. The polypropylene may be at least one compound selected from the group consisting of a homopolymer of propylene, a copolymer of propylene, metallocene polypropylene and a composite resin having improved physical properties by adding talc, flame retardant, etc. to a homopolymer or copolymer of propylene.

The content of the polyolefin resin is preferably 40 to 98 parts by weight, and more preferably 70 to 96 parts by weight. If the content of the polyolefin resin is less than 40 parts by weight, molding is difficult. If the content of the polyolefin resin is greater than 98 parts by weight, the barrier property is poor.

The nanocomposite having barrier properties is be prepared by mixing an intercalated clay with a polyamide.

The weight ratio of the resin having barrier properties to the intercalated clay in the nanocomposite is 58.0:42.0 to 99.9:0.1, and preferably 85.0:15.0 to 99.0:1.0. If the weight ratio of the resin having barrier properties to the intercalated clay is less than 58.0:42.0, the intercalated clay agglomerates and dispersing is difficult. If the weight ratio of the resin having barrier properties to the intercalated clay is greater than 99.9:0.1, the improvement in the barrier properties is negligible.

The intercalated clay is preferably organic intercalated clay. The content of an organic material in the intercalated clay is preferably 1 to 45 wt %. When the content of the organic material is less than 1 wt%, the compatibility of the intercalated clay and the resin having barrier properties is poor. When the content of the organic material is greater than 45 wt%, the intercalation of the resin having barrier properties is difficult.

The intercalated clay includes at least one material selected from montmorillonite, bentonite, kaolinite, mica, hectorite, fluorohectorite, saponite, beidelite, nontronite, stevensite, vermiculite, hallosite, volkonskoite, suconite, magadite, and kenyalite; and the organic material preferably has a functional group selected from primary ammonium to quaternary ammonium, phosphonium, maleate, succinate, acrylate, benzylic hydrogen, oxazoline, and dimethyldistearylammonium.

If an ethylene-vinyl alcohol copolymer is included in the nanocomposite, the content of ethylene in the ethylene-vinyl alcohol copolymer is preferably 10 to 50 mol %. If the content of ethylene is less than 10 mol %, melt molding becomes difficult due to poor processability. If the content of ethylene exceeds 50 mol %, oxygen and liquid barrier properties are insufficient.

The polyamide may be nylon 4.6, nylon 6, nylon 6.6, nylon 6.10, nylon 7, nylon 8, nylon 9, nylon 11, nylon 12, nylon 46, MXD6, amorphous polyamide, a copolymerized polyamide containing at least two of these, or a mixture of at least two of these.

The amorphous polyamide refers to a polyamide having insufficient crystallinity, that is, not having an endothermic crystalline melting peak when measured by a differential scanning calorimetry (DSC) (ASTM D-3417, 10 °C /min).

In general, the polyamide can be prepared using diamine and dicarboxylic acid. Examples of the diamine include hexamethylenediamine, 2-methylpentamethylenediamine, 2,2,4-trimethylhexamethylenediamine, 2,4,4-trimethylhexamethylenediamine, bis(4-aminocyclohexyl)methane, 2,2-bis(4-aminocyclohexyl)isopropylidene, 1,4-diaminocyclohexane, 1,3-diaminocyclohexane, meta-xylenediamine, 1,5-diaminopentane, 1,4-diaminobutane, 1,3-diaminopropane, 2-ethyldiaminobutane, 1,4-diaminomethylcyclohexane, methane-xylenediamine, alkyl-substituted or unsubstituted m-phenylenediamine and p-phenylenediamine, etc. Examples of the dicarboxylic acid include alkyl-substituted or unsubstituted isophthalic acid, terephthalic acid, adipic acid, sebacic acid, butanedicarboxylic acid, etc.

Polyamide prepared using aliphatic diamine and aliphatic dicarboxylic acid is general semicrystalline polyamide (also referred to as crystalline nylon) and is not amorphous polyamide. Polyamide prepared using aromatic diamine and aromatic dicarboxylic acid is not easily treated using a general melting process.

Thus, amorphous polyamide is preferably prepared, when one of diamine and dicarboxylic acid used is aromatic and the other is aliphatic. Aliphatic groups of the amorphous polyamide are preferably C₁-C₁₅ aliphatic or C₄-C₈ alicyclic alkyls. Aromatic groups of the amorphous polyamide are preferably substituted C₁-C₆ mono- or bicyclic aromatic groups. However, all the above amorphous polyamides is not preferable in the present invention. For example, metaxylenediamine adipamide is easily crystallized when heated during a thermal molding process or when oriented, therefore, it is not preferable.

Examples of preferable amorphous polyamides include hexamethylenediamine isophthalamide, hexamethylene diamine isophthalamide/terephthalamide terpolymer having a ratio of isophthalic acid/terephthalic acid of 99/1 to 60/40, a mixture of 2,2,4- and 2,4,4-trimethylhexamethylenediamine terephthalamide, a copolymer of hexamethylenediamine or 2-methylpentamethylenediamine and an isophthalic acid, terephthalic acid or mixtures thereof. While polyamide based on hexamethylenediamine isophthalamide/terephthalamide, which has a high terephthalic acid content, is useful, it should be mixed with another diamine such as 2-methyldiaminopentane in order to produce an amorphous polyamide that can be processed.

The above amorphous polyamide comprising only the above monomers may contain a small amount of lactam, such as caprolactam or lauryl lactam, as a comonomer. It is important that the polyamide be amorphous. Therefore, any comonomer that does not crystallize polyamide can be used. About 10 wt% or less of a liquid or solid plasticizer, such as glycerole, sorbitol, or toluenesulfoneamide . (Santicizer 8 monsanto) can also be included in the amorphous polyamide. For most applications, a glass transition temperature Tg (measured in a dried state, i.e., with a water content of about 0.12 wt% or less) of amorphous polyamide is about 70-170 °C , and preferably about 80-160 °C . The amorphous polyamide, which is not blended, has a Tg of approximately 125 °C in a dried state. The lower limit of Tg is not clear, but 70 °C is an approximate lower limit. The upper limit of Tg is not clear, too. However, when polyamide with a Tg of about 170 °C or greater is used, thermal molding is difficult. Therefore, polyamide having both an acid and an amine having aromatic groups cannot be thermally molded due to too high Tg, and thus, is not suitable for the purposes of the present invention.

The polyamide may also be a semicrystalline polyamide. The semicrystalline polyamide is generally prepared using lactam, such as nylon 6 or nylon 11, or an amino acid, or is prepared by condensing diamine, such as hexamethylenediamine, with dibasic acid, such as succinic acid, adipic acid, or sebacic acid. The polyamide may be a copolymer or a terpolymer such as a copolymer of hexamethylenediamine/ adipic acid and caprolactame (nylon 6, 66). A mixture of two or more crystalline polyamides can also be used. The semicrystalline and amorphous polyamides are prepared by condensation polymerization well-known in the art.

If an ionomer is included in the nanocomposite, the ionomer is preferably a copolymer of acrylic acid and ethylene, with a melt index of 0.1 to 10 g/10 min (190 °C, 2,160 g).

The nanocomposite may include additives such as a thermal stabilizer or a plasticizer in addition to the intercalated clay and the resin having barrier properties.

The content of the nanocomposite is preferably 0.5 to 60 parts by weight, and more preferably 4 to 30 parts by weight. If the content of the nanocomposite is less than 0.5 part by weight, an improvement of barrier properties is negligible. If the content of the nanocomposite is greater than 60 parts by weight, processing is difficult.

The finer the intercalated clay is exfoliated in the resin having barrier property in the nanocomposite, the better the barrier properties that can be obtained. This is because the exfoliated intercalated clay forms a barrier film and thereby improves barrier properties and mechanical properties of the resin itself, and ultimately improves barrier properties and mechanical properties of a molded article prepared from the composition. Accordingly, the ability to form a barrier to gas and liquid is maximized by compounding the resin having barrier properties and the intercalated clay, and dispersing the nano-sized intercalated clay in the resin, thereby maximizing the contact area of the polymer chain and the intercalated clay.

The compatibilizer reduces brittleness of the polyolefin resin and improves the compatibility of the polyolefin resin in the nanocomposite to form a molded article with a stable structure.

The compatibilizer may be a hydrocarbon polymer having polar groups. When a hydrocarbon polymer having polar groups is used, the hydrocarbon polymer portion increases the affinity of the compatibilizer to the polyolefin resin and to the nanocomposite having barrier properties, thereby obtaining a molded article with a stable structure.

The compatibilizer can include an compound selected from an epoxy-modified polystyrene copolymer, an ethylene-ethylene anhydride-acrylic acid copolymer, an ethylene-ethyl acrylate copolymer, an ethylene-alkyl acrylate-acrylic acid copolymer, a maleic anhydride modified (graft) high-density polyethylene, a maleic anhydride modified (graft) polypropylene, a maleic anhydride modified (graft) linear low-density polyethylene, an ethylene-alkyl (meth)acrylate-(meth)acrylic acid copolymer, an ethylene-butyl acrylate copolymer, an ethylene-vinyl acetate copolymer, a maleic anhydride modified (graft) ethylene-vinyl acetate copolymer, and a modification thereof.

The content of the compatibilizer is preferably 1 to 30 parts by weight, and more preferably 2 to 15 parts by weight. If the content of the compatibilizer is less than 1 part by weight, the mechanical properties of a molded article from the composition are poor. If the content of the compatibilizer is greater than 30 parts by weight, the molding of the composition is difficult.

When an epoxy-modified polystyrene copolymer is used as the compatibilizer, a copolymer comprising a main chain which comprises 70 to 99 parts by weight of styrene and 1 to 30 part by weight of an epoxy compound represented by Formula 1, and branches which comprise 1 to 80 parts by weight of acrylic monomers represented by Formula 2, is preferable.

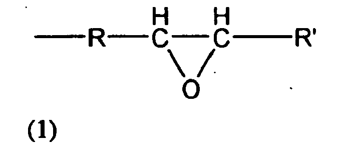

where each of R and R' is independently a C₁-C₂₀ aliphatic residue or a C₁-C₂₀ aromatic residue having double bonds at its termini

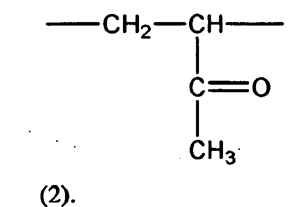

Each of the maleic anhydride modified (graft) high-density polyethylene, maleic anhydride modified (graft) polypropylene, maleic anhydride modified (graft) linear low-density polyethylene, and maleic anhydride modified (graft) ethylene-vinyl acetate copolymer preferably comprises branches having 0.1 to 10 parts by weight of maleic anhydride based on 100 parts by weight of the main chain. When the content of the maleic anhydride is less than 0.1 part by weight, it does not function as the compatibilizer. When the content of the maleic anhydride is greater than 10 parts by weight, it is not preferable due to an unpleasant odor.

The composition of the present invention is prepared by dry-blending the nanocomposite having barrier properties in a pellet form, the compatibilizer and the polyolefin resin at a constant compositional ratio in a pellet mixer.

An article having barrier properties according to the present invention is obtained by molten-blending and molding the dry-blended pelleted composition. In the article having barrier properties, the form of the nanocomposite dispersed in the polyolefin resin matrix is particularly important in the improvement of barrier properties. When a polyamides is used as the resin having barrier properties, the nanocomposite is dispersed in a multiple lamella form and when at least one resin selected from the group consisting of an EVOH copolymer, an ionomer and a polyvinylalcohol is used, the nanocomposite is dispersed in a disc form. Due to such a dispersion form, the passage route of gases and organic solvents is extended, and thus the passage speed is decreased, thereby obtaining superior barrier properties.

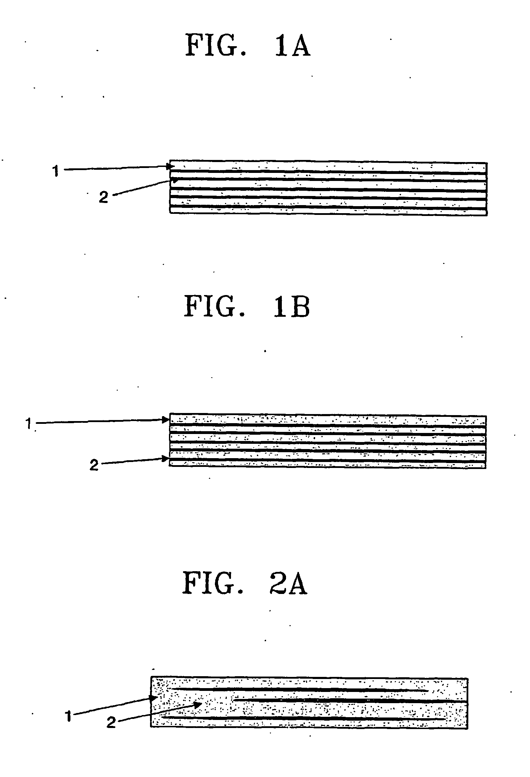

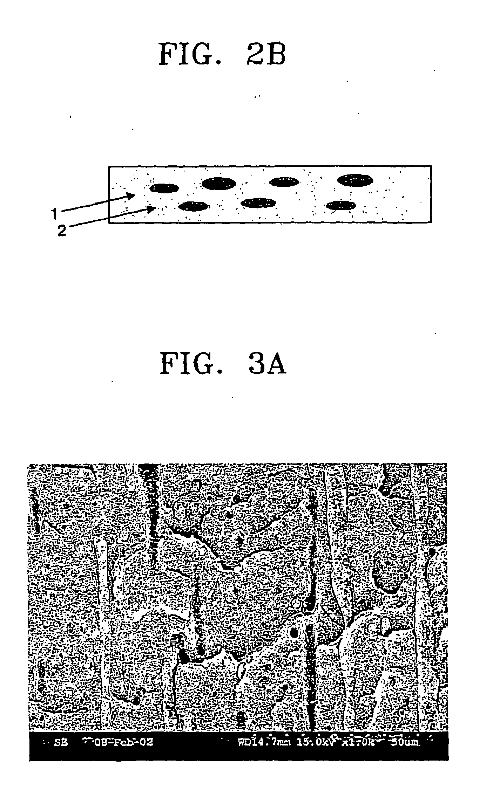

The structure of the article having barrier properties according to the present invention is schematically illustrated in FIGS. 1 and 2. FIG. 1 schematically illustrates cross-sections of an extrusion molded article having barrier properties when the resin having barrier properties is a polyamide, wherein a polyamide nanocomposite 2 forms a multiple lamella structure in a continuous polyolefin 1. FIG. 1A is a machine direction (MD) cross-sectional view and FIG. 1B is a transverse direction (TD) cross-sectional view. FIG. 2 schematically illustrates cross-sections of a blow-molded article having barrier properties when the resin having barrier properties is at least one resin selected from the group consisting of an EVOH copolymer, an ionomer and a polyvinylalcohol, wherein a nanocomposite 3 forms a disc structure in a continuous polyolefin 1. FIG. 2A is a MD cross-sectional view and FIG. 2B is a TD cross-sectional view. FiG. 2A, 2B are not part of the invention.

When a polyamide is used as the resin having barrier properties, the nanocomposite is dispersed in the polyolefin resin in a multiple lamella form in which 2 to 300 lamellas are included in the unit length of 1 mm, the thickness of the lamella is in the range of 0.001 to 200 µm, and an average aspect ratio, ϕn, is 10 to 1,000. The average aspect ratio, ϕn, is obtained by the equation of ϕn = ΣNi₄ϕi/ Σ Ni, where Ni is the number of lamella in the unit length (1 mm) and ϕi is an aspect ratio of each lamella.

In the preparation of the article having barrier properties according to the present invention, the nanocomposite is prepared through plasticization and blending processes at the melting point or higher using a single screw extruder, a co-rotation twin screw extruder, a counter-rotation twin screw extruder, a continuous compounder, a planetary gear extruder, a batch compounder etc. The article having barrier properties can be prepared by general molding methods including blow molding, extrusion molding, pressure molding, and injection molding. The molded article having barrier properties may be a pipe, a container, a sheet, a film, and the like. The article having barrier properties can also be a single-layered product composed of only the nanocomposite composition or a multi-layered product having the nanocomposite composition layer and another resin layer.

Since the intercalated clay in the nanocomposite is arranged during the molding process to form a multi-layered barrier, the article having barrier properties of the present invention has further improved barrier properties.

Hereinafter, the present invention is described in more detail through examples. The following examples are meant only to increase understanding of the present invention, and are not meant to limit the scope of the invention.

### Advantageous Effects

The article having barrier properties of the present invention has superior mechanical strength and forms a strong barrier to oxygen, organic solvent, and moisture. Also, the nanocomposite composition has superior chemical barrier properties and moldability.

### Description of Drawings

The above and other features and advantages of the present invention will become more apparent by describing in detail exemplary embodiments thereof with reference to the attached drawings in which:

FIGS. 1A and 1B schematically illustrate machine direction (MD) and transverse direction (TD) cross sections of an article having barrier properties, prepared according to an embodiment of the present invention;

FIGS. 2A and 2B schematically illustrate MD and TD cross-sections of an article having barrier properties, not according to the invention.

FIGS. 3A and 3B are electron microscopic photographs of MD and TD cross-sections of an article having barrier properties, blow-molded according to Example 1 not according to the invention. and

FIGS. 4A and 4B are electron microscopic photographs of MD and TD cross-sections of an article having barrier properties, blow-molded according to Example 2.

### Mode for Invention

Examples

The materials used in the following examples are as follows:

EVOH: E105B (Kuraray, Japan)

Nylon 6: EN 300 (KP Chemicals)

Ionomer. SURLYN 8527 (Dupont, U.S.A.)

HDPE-g-MAH: Compatibilizer, PB3009 (CRAMPTON)

Polyolefin resin: High-density polyethylene (BDO 390, LG CHEM, melt index: 0.3 g/10 min, density: 0.949 g/cm³)

Clay: Closite 20A (SCP)

Thermal stabilizer: IR 1098 (Songwon Inc.)

Preparation Example 1*

(Preparation of EVOH/Intercalated Clay Nanocomposite)

97 wt % of an ethylene-vinyl alcohol copolymer (EVOH; E-105B (ethylene content: 44 mol %); Kuraray, Japan; melt index: 5.5 g/10 min; density: 1.14 g/cm³) was put in the main hopper of a twin screw extruder (SM Platek co-rotation twin screw extruders 40). Then, 3 wt% of organic montmorillonite (Southern Intercalated Clay Products, USA; Closite 20A) as an intercalated clay and 0.1 part by weight of IR 1098 as a thermal stabilizer based on total 100 parts by weight of the EVOH copolymer and the organic montmorillonite was separately put in the side feeder of the twin screw extruder to prepare an EVOH/intercalated clay nanocomposite in a pellet form. The extrusion temperature condition was 180-190-200-200-200-200-200 °C, the screws were rotated at 300 rpm, and the discharge condition was 30 kg/hr.

Preparation Example 2

(Preparation of Nylon 6/Intercalated Clay Nanocomposite)

97 wt % of a polyamide (nylon 6, EN300) was put in the main hopper of a twin screw extruder (SM Platek co-rotation twin screw extruder; ϕ 40). Then, 3 wt% of organic montmorillonite as an intercalated clay and 0.1 part by weight of IR 1098 as a thermal stabilizer based on total 100 parts by weight of the polyamide and the organic montmorillonite was separately put in the side feeder of the twin screw extruder to prepare a polyamide/intercalated clay nanocomposite in a pellet form. The extrusion temperature condition was 220-225-245-245-245-245-245 °C , the screws were rotated at 300 rpm, and the discharge condition was 40 kg/hr.

Preparation Example 3*

(Preparation of lonomer/Intercalated Clay Nanocomposite)

97 wt % of an ionomer was put in the main hopper of a twin screw extruder (SM Platek co-rotation twin screw extruder; ϕ 40). Then, 3 wt% of organic montmorillonite as an intercalated clay and 0.1 part by weight of IR 1098 as a thermal stabilizer based on total 100 parts by weight of the ionomer and the organic montmorillonite was separately put in the side feeder of the twin screw extruder to prepare an ionomer/ intercalated clay nanocomposite in a pellet form. The extrusion temperature condition was 220-225-245-245-245-245-245 °C , the screws were rotated at 300 rpm, and the discharge condition was 40 kg/hr..

Example 1*

25 parts by weight of the EVOH/intercalated clay nanocomposite obtained in the Preparation Example 1, 5 parts by weight of a compatibilizer, and 70 parts by weight of high-density polyethylene were dry-blended in a double cone mixer (MYDCM-100) for 30 minutes and put in the main hopper of a blow-molder (SMC- ϕ 60 blow-molder). Under the extrusion temperature condition of 185-195-195-195 °C , the blow-molding process was performed to manufacture a 1000 mL container having barrier properties.

Example 2

25 parts by weight of the nylon 6/intercalated clay nanocomposite obtained in the Preparation Example 2, 5 parts by weight of a compatibilizer, and 70 parts by weight of high-density polyethylene were dry-blended in a double cone mixer (MYDCM-100) for 30 minutes and put in the main hopper of a blow-molder (SMC- ϕ 60 blow-molder). Under the extrusion temperature condition of 195-210-220-220 °C, the blow-molding process was performed to manufacture a 1000 mL container having barrier properties.

Example 3

25 parts by weight of the nylon 6/intercalated clay nanocomposite obtained in the Preparation Example 2, 5 parts by weight of a compatibilizer, and 70 parts by weight of HDPE were dry-blended and simultaneously put in the main hopper of a blow molder (SMC- ϕ 60 blow-molder) through belt-type feeders (K-TRON Nos. 1, 2 and 3), respectively. Under the extrusion temperature condition of 195-210-220-220 °C , the blow-molding process was performed to manufacture a 1000 mL container having barrier properties.

Example 4

5 parts by weight of the nylon 6/intercalated clay nanocomposite obtained in the Preparation Example 2, 2 parts by weight of a compatibilizer, and 93 parts by weight of high-density polyethylene were dry-blended in a double cone mixer (MYDCM-100) for 30 minutes and put in the main hopper of a blow-molder (SMC- ϕ 60 blow-molder). Under the extrusion temperature condition of 195-210-220-220 °C, the blow-molding process was performed to manufacture a 1000 mL container having barrier properties.

Example 5

40 parts by weight of the nylon 6/intcrcalated clay nanocomposite obtained in the Preparation Example 2, 20 parts by weight of a compatibilizer, and 40 parts by weight of high-density polyethylene were dry-blended in a double cone mixer (MYDCM-100) for 30 minutes and put in the main hopper of a blow-molder (SMC-ϕ 60 blow-molder). Under the extrusion temperature condition of 195-210-220-220 °C, the blow-molding process was performed to manufacture a 1000 mL container having barrier properties.

Examples 6*

25 parts by weight of the ionomer/intercalated clay nanocomposite obtained in the Preparation Example 3, 5 parts by weight of a compatibilizer, and 70 parts by weight of high-density polyethylene were dry-blended and put in the main hopper of a blow-molder (SMC- ϕ 60 blow-molder). Under the extrusion temperature condition of 240-265-265-265 °C , the blow-molding process was performed to manufacture a 1000 mL container having barrier properties.

Comparative Example 1

A container having barrier properties was manufactured in the same manner as in Example 1, except that the organic montmorillonite as an intercalated clay was not used.

Comparative Example 2

A container having barrier properties was manufactured in the same manner as in Example 2, except that the organic montmorillonite as an intercalated clay was not used.

Comparative Example 3

A container having barrier properties was manufactured in the same manner as in Example 3, except that the organic montmorillonite as an intercalated clay was not used.

Experimental Example

a) Liquid barrier properties

Toluene, Desys herbicide (1% of deltametrine+emulsifier, stabilizer, and solvent; Kyung Nong), Batsa insecticide (50% of BPMC+50% of emulsifier and solvent), and water were put in the containers manufactured in Examples 1 to 6 and Comparative Examples 1 to 3. Then, the weight change was determined after 30 days under a condition of forced exhaust at 50 °C. For toluene, the weight change was further determined at room temperature.

b) Gas barrier properties (cc/m² · day · atm)

The containers manufactured in Examples 1 to 6 and Comparative Examples 1 to 3 were left alone under a temperature of 23 °C and a relative humidity of 50% for 1 day. Then, the gas penetration rate was determined (Mocon OX-TRAN 2/20, U.S.A).

**TABLE 1**

| Gas Barrier Properties | | |
|---|---|---|
| | Oxygen penetration (cm²/m² · 24 hrs · atom) | Moisture penetration (g/m² · 24 hrs) |
| Example 1* | 10.5 | 1.24 |
| Example 2 | 5.9 | 1.11 |
| Example 3 | 6.3 | 1.18 |
| Example 4 | 24.9 | 1.04 |
| Example 5 | 2.3 | 1.27 |
| Example 6* | 19.6 | 1.32 |
| Comparative Example 1 | 79.4 | 1.59 |
| Comparative Example 2 | 86.8 | 1.52 |
| Comparative Example 3 | 98.1 | 2.11 |

| | | |
|---|---|---|
| * Reference examples | | |

**TABLE 2**

| Liquid Barrier Properties | | | | | |
|---|---|---|---|---|---|
| Classificatio n | Liquid barrier properties (%) | | | | |
| | Weight change at 25 °C | Weight change at 50 °C | | | |
| | Toluene | Toluene | Desys | Batsa | Water |
| Example 1* | 0.037 | 0.421 | 0.153 | 0.031 | 0.0014 |
| Example 2 | 0.012 | 0.118 | 0.084 | 0.013 | 0.0017 |
| Example 3 | 0.015 | 0.143 | 0.095 | 0.018 | 0.0016 |
| Example 4 | 0.048 | 0.814 | 0.195 | 0.031 | 0.0014 |
| Example 5 | 0.009 | 0.049 | 0.052 | 0.008 | 0.0018 |
| Example 6* | 0.044 | 0.685 | 0.119 | 0.099 | 0.0019 |
| Comparative Example 1 | 0.430 | 5.993 | 1.274 | 0.474 | 0.0020 |
| Comparative Example 2 | 0.623 | 6.319 | 1.532 | 0.651 | 0.0031 |
| Comparative Example 3 | 1.125 | 8.304 | 1.849 | 0.847 | 0.0033 |

As shown in Tables 1 and 2, containers of Examples 1 to 6 have superior barrier properties to liquid and gas compared to those of Comparative Examples 1 to 3.

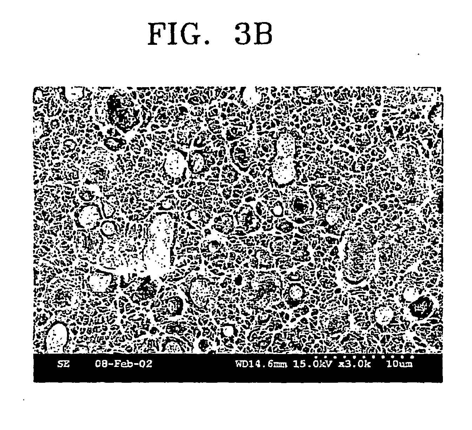

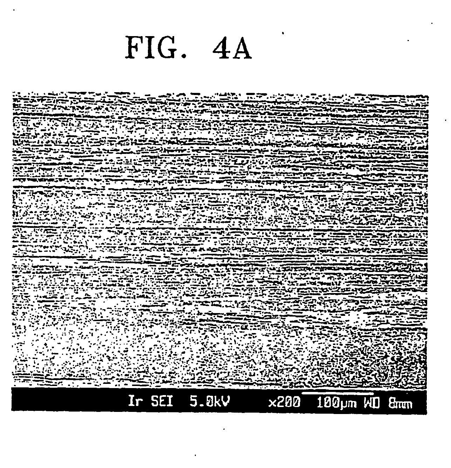

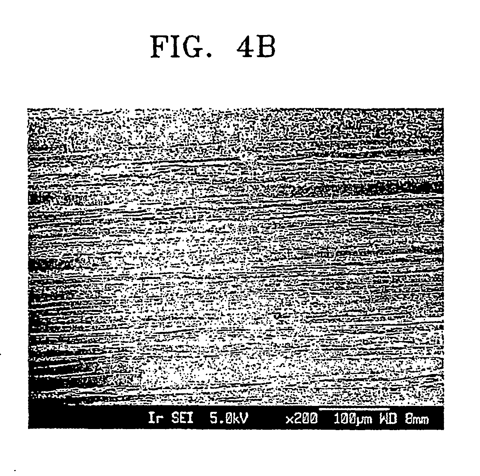

Electron microscopic photographs of the cross sections of the blow-molded containers manufactured in Examples 1 and 2 are shown in FIGS. 3 and 4.

FIGS. 3A and 3B show MD and TD cross sections of the blow-molded container of Example 1. In FIGS. 3A and 3B, 10 to 400 discs are included in the unit area of 1 mm², the thickness of disc is in the range of 3 to 200 □, the length of the major axis is in the range of 5 to 1000 □, and an average aspect ratio is 32.

FIGS. 4A and 4B show MD and TD cross sections of the blow-molded container of Example 2. In FIGS. 4A and 4B, 10 to 300 lamellas are included in the unit length of 1 mm, the thickness of lamella is in the range of 3 to 200 □, and an average aspect ratio is 523.

As can be seen from the figures, the article having barrier properties according to the present invention includes the nanocomposite dispersed in the continuous resin in the form of a multiple lamella or disc to have good barrier properties.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. An article having barrier properties prepared from a dry-blended composition comprising:
40 to 98 parts by weight of a polyolefin resin;
0.5 to 60 parts by weight of a nanocomposite having barrier properties, comprising a polyamide and an intercalated clay; and
1 to 30 parts by weight of a compatibilizer,
wherein the nanocomposite is dispersed in the polyolefin resin in a multiple lamella form.

2. The article having barrier properties of claim 1, wherein the polyolefin resin is at least one compound selected from the group consisting of a high density polyethylene (HDPE), a low density polyethylene (LDPE), a linear low density polyethylene (LLDPE), an ethylene-propylene copolymer, metallocene polyethylene, and polypropylene.

3. The article having barrier properties of claim 2, wherein the polypropylene is at least one compound selected from the group consisting of a homopolymer or copolymer of propylene, metallocene polypropylene, and a composite resin prepared by adding talc or flame retardant to homopolymer or copolymer of propylene.

4. The article having barrier properties of claim 1, wherein the intercalated clay is at least one compound selected from the group consisting of montmorillonite, bentonite, kaolinite, mica, hectorite, fluorohectorite, saponite, beidelite, nontronite, stevensite, vermiculite, hallosite, volkonskoite, suconite, magadite and kenyalite.

5. The article having barrier properties of claim 1, wherein the weight of the resin having barrier properties to the intercalated clay in the nanocomposite is 58.0:42.0 to 99.9:0.1.

6. The article having barrier properties of claim 1, wherein the intercalated clay comprises 1 to 45 wt % of an organic material.

7. The article having barrier properties of claim 6, wherein the organic material has at least one functional group selected from the group consisting of primary ammonium to quaternary ammonium, phosphonium, maleate, succinate, acrylate, benzylic hydrogen, oxazoline, and dimethyldistearylammonium.

8. The article having barrier properties of claim 1, wherein the polyamide is nylon 4.6, nylon 6, nylon 6.6, nylon 6.10, nylon 7, nylon 8, nylon 9, nylon 11, nylon 12, nylon 46, MXD6, amorphous polyamide, a copolymerized polyamide containing at least two of these, or a mixture of at least two of these.

9. The article having barrier properties of claim 1, wherein the compatibilizer is one or more compounds selected from the group consisting of an ethylene-ethylene anhydride-acrylic acid copolymer, an ethylene-ethyl acrylate copolymer, an ethylene-alkyl acrylate-acrylic acid copolymer, a maleic anhydride modified (graft) polypropylene, a maleic anhydride modified (graft) linear low-density polyethylene, an ethylene-alkyl (meth)acrylate-(meth)acrylic acid copolymer, an ethylene-butyl acrylate copolymer, an ethylene-vinyl acetate copolymer, and a maleic anhydride modified (graft) ethylene-vinyl acetate copolymer.

10. The article having barrier properties of claim 1, wherein the nanocomposite maintains its fully exfoliated, partially exfoliated, intercalated, or partially intercalated morphology even when being molded.

11. The article having barrier properties of claim 1, wherein the nanocomposite is prepared through plasticizing and blending processes at the melting point or higher using a single screw extruder, a co-rotation twin screw extruder, a counter-rotation twin screw extruder, a continuous compounder, a planetary gear extruder or a batch compounder.

12. The article having barrier properties of claim 1, prepared through blow molding, extrusion molding, pressure molding, or injection molding.

13. The article having barrier properties of claim 1, having a single layer form or a multiple layer form.

14. The article having barrier properties of claim 1, wherein the nanocomposite is dispersed in the polyolefin resin in a multiple lamella form in which 2 to 300 lamellas are included in unit length of 1 mm, the thickness of the lamella is in the range of 0.001 to 200 µm, and an average aspect ratio, ϕn, is 10 to 1,000.

15. The article having barrier properties of claim 8, wherein the glass transition temperature of the amorphous polyamide is about 70-170°C.

16. The article having barrier properties of claim 8, wherein the amorphous polyamide is selected from the group consisting of hexamethylendiamine isophthalamide, hexamethylene diamine isophthalamide/terephthalamide terpolymer having a ratio of isophthalic acid/terephthalic acid of 99/1 to 60/40, a mixture of 2,2,4- and 2,4,4-trimethylhexamethylenediamine terephthalamide, and a copolymer of hexamethylenediamine or 2-methylpentamethylenediamine and isophthalic acid, terephthalic acid, or a mixture thereof.

17. The article having barrier properties of claim 16, wherein the amorphous polyamide is hexamethylene diamine isophthalamide/terephthalamide terpolymer having a ratio of isophthalic acid to terephthalic acid of 70:30.

18. The article having barrier properties of claim 9, wherein the maleic anhydride modified (graft) high-density polyethylene, maleic anhydride modified (graft) linear low-density polyethylene, maleic anhydride modified (graft) polypropylene, or maleic anhydride modified (graft) ethylene-vinyl acetate copolymer comprises branches having 0.1 to 10 parts by weight of maleic anhydride based on 100 parts by weight of the main chain.

## Patentansprüche

1. Artikel mit Barriereeigenschaften, hergestellt aus einer trocken vermischten Zusammensetzung, umfassend:
40 bis 98 Gewichtsteile eines Polyolefinharzes;
0,5 bis 60 Gewichtsteile eines Nanoverbundwerkstoffes mit Barriereeigenschaften, umfassend ein Polyamid und einen Einlagerungston; und
1 bis 30 Gewichtsteile eines Kompatibilisators,
wobei der Nanoverbündwerkstoff im Polyolefinharz in einer mehrschichtigen Form dispergiert ist.

2. Artikel mit Barriereeigenschaften nach Anspruch 1, wobei das Polyolefinharz wenigstens eine Verbindung ist, die ausgewählt ist aus der Gruppe, bestehend aus einem Polyethylen hoher Dichte (HDPE), einem Polyethylen niedriger Dichte (LDPE), einem linearen Polyethylen niedriger Dichte (LLDPE), einem Ethylen-Propylen-Copolymer, Metallocen-Polyethylen und Polypropylen.

3. Artikel mit Barriereeigenschaften nach Anspruch 2, wobei das Polypropylen wenigstens eine Verbindung ist, die ausgewählt ist aus der Gruppe, bestehend aus einem Homopolymer oder Copolymer von Propylen, Metallocen-Polypropylen und einem Verbundharz, hergestellt durch Zugeben von Talkum oder Flammverzögerungsmittel zu Homopolymer oder Copolymer von Propylen.

4. Artikel mit Barriereeigenschaften nach Anspruch 1, wobei der Einlagerungston wenigstens eine Verbindung ist, die ausgewählt ist aus der Gruppe, bestehend aus Montmorillonit, Bentonit, Kaolinit, Glimmer, Hectorit, Fluorhectorit, Saponit, Beidelit, Nontronit, Stevensit, Vermiculit, Hallosit, Volkonskoit, Suconit, Magadit und Kenyalit.

5. Artikel mit Barriereeigenschaften nach Anspruch 1, wobei das Gewicht des Harzes mit Barriereeigenschaften zum Einlagerungston im Nanoverbundwerkstoff 58,0:42,0 bis 99,9:0,1 beträgt.

6. Artikel mit Barriereeigenschaften nach Anspruch 1, wobei der Einlagerungston 1 bis 45 Gew.-% eines organischen Materials umfasst.

7. Artikel mit Barriereeigenschaften nach Anspruch 6, wobei das organische Material wenigstens eine funktionelle Gruppe aufweist, die ausgewählt ist aus der Gruppe, bestehend aus primärem Ammonium bis quartärem Ammonium, Phosphonium, Maleat, Succinat, Acrylat, benzylischem Wasserstoff, Oxazolin und Dimethyldistearylammonium.

8. Artikel mit Barriereeigenschaften nach Anspruch 1, wobei das Polyamid Nylon 4.6, Nylon 6, Nylon 6.6, Nylon 6.10, Nylon 7, Nylon 8, Nylon 9, Nylon 11, Nylon 12, Nylon 46, MXD6, amorphes Polyamid, ein copolymerisiertes Polyamid, das wenigstens zwei von diesen enthält, oder eine Mischung von wenigstens zwei von diesen ist.

9. Artikel mit Barriereeigenschaften nach Anspruch 1, wobei der Kompatibilisator eine oder mehrere Verbindungen ist, die ausgewählt sind aus der Gruppe, bestehend aus einem Ethylen-Ethylenanhydrid-Acrylsäure-Copolymer, einem Ethylen-Ethylacrylat-Copolymer, einem Ethylen-Alkylacrylat-Acrylsäure-Copolymer, einem mit Maleinsäureanhydrid modifizierten (Pfropf)-Polypropylen, einem mit Maleinsäureanhydrid modifizierten linearen (Pfropf)-Polyethylen niedriger Dichte, einem Ethylen-Alkyl(meth)acrylat-(Meth)acrylsäure-Copolymer, einem Ethylen-Butylacrylat-Copolymer, einem Ethylen-Vinylacetat-Copolymer und einem mit Maleinsäureanhydrid modifizierten (Pfropf)-Ethylen-Vinylacetat-Copolymer.

10. Artikel mit Barriereeigenschaften nach Anspruch 1, wobei der Nanoverbundwerkstoff seine vollständig abgeschieferte, teilweise abgeschieferte, eingelagerte oder teilweise eingelagerte Morphologie beibehält, selbst wenn er ausgeformt worden ist.

11. Artikel mit Barriereeigenschaften nach Anspruch 1, wobei der Nanoverbundwerkstoff hergestellt wird durch Plastifizierungs- und Mischungsverfahren am Schmelzpunkt oder höher unter Verwendung eines Einschneckenextruders, eines Gleichdrehungs-Doppelschneckenextruders, eines Gegendrehungs-Doppelschneckenextruders, eines kontinuierlichen Compounders, eines Planetengetriebeextruders oder eines Chargen-Compounders.

12. Artikel mit Barriereeigenschaften nach Anspruch 1, hergestellt durch Blasformung, Extrusionsformung, Druckformung oder Spritzformung.

13. Artikel mit Barriereeigenschaften nach Anspruch 1, der eine einlagige Form oder eine mehrlagige Form aufweist.

14. Artikel mit Barriereeigenschaften nach Anspruch 1, wobei der Nanoverbundwerkstoff im Polyolefinharz in einer mehrschichtigen Form dispergiert ist, in der 2 bis 300 Schichten in einer Einheitslänge von 1 mm eingeschlossen sind, die Dicke der Schicht im Bereich von 0,001 bis 200 µm liegt und ein durchschnittliches Längenverhältnis, ϕn, 10 bis 1.000 beträgt.

15. Artikel mit Barriereeigenschaften nach Anspruch 8, wobei die Glasübergangstemperatur des amorphen Polyamids etwa 70-170°C beträgt.

16. Artikel mit Barriereeigenschaften nach Anspruch 8, wobei das amorphe Polyamid ausgewählt ist aus der Gruppe, bestehend aus Hexamethylendiaminisophthalamid, Hexamethylendiaminisophthalamid/terephthalamid-Terpolymer mit einem Verhältnis von Isophthalsäure/Terephthalsäure von 99/1 bis 60/40, einer Mischung aus 2,2,4- und 2,4,4-Trimethylhexamethylendiaminterephthalamid und einem Copolymer von Hexamethylendiamin oder 2-Methylpentamethylendiamin und Isophthalsäure, Terephthalsäure oder einer Mischung davon.

17. Artikel mit Barriereeigenschaften nach Anspruch 16, wobei das amorphe Polyamid Hexamethylendiaminisophthalamid/terephthalamid-Terpolymer mit einem Verhältnis von Isophthalsäure zu Terephthalsäure von 70:30 ist.

18. Artikel mit Barriereeigenschaften nach Anspruch 9, wobei das mit Maleinsäureanhydrid modifizierte (Pfropf)-Polyethylen hoher Dichte, mit Maleinsäureanhydrid modifizierte lineare (Pfropf)-Polyethylen niedriger Dichte, mit Maleinsäureanhydrid modifizierte (Pfropf)-Polypropylen oder mit Maleinsäureanhydrid modifizierte (Pfropf)-Ethylen-Vinylacetat-Copolymer Verzweigungen mit 0,1 bis 10 Gewichtsteilen Maleinsäureanhydrid, bezogen auf 100 Gewichtsteile der Hauptkette, umfasst.

## Revendications

1. Un article ayant des propriétés de barrière préparé à partir d'une composition mélangée à sec comprenant :
40 à 98 parties en poids d'une résine polyoléfine ;
0,5 à 60 parties en poids d'un nanocomposite ayant des propriétés de barrière, comprenant un polyamide et une argile intercalée ; et
1 à 30 parties en poids d'un agent de compatibilité,
où le nanocomposite est dispersé dans la résine polyoléfine sous forme de lamelles multiples.

2. L'article ayant les propriétés de barrière selon la revendication 1, où la résine polyoléfine est au moins un composé sélectionné parmi le groupe constitué d'un polyéthylène haute densité (HDPE), un polyéthylène basse densité (LDPE), un polyéthylène basse densité linéaire (LLDPE), un copolymère d'éthylène-propylène, un polyéthylène métallocène et un polypropylène.

3. L'article ayant les propriétés de barrière selon la revendication 2, où le polypropylène est au moins un composé sélectionné parmi le groupe constitué d'un homopolymère ou copolymère de propylène, polyéthylène métallocène, et d'une résine composite préparée en ajoutant du talc ou un retardateur de flamme à l'homopolymère ou copolymère de propylène.

4. L'article ayant les propriétés de barrière selon la revendication 1, où l'argile intercalée est au moins un composé sélectionné parmi le groupe constitué de montmorillonite, bentonite, kaolinite, mica, hectorite, fluorohectorite, saponite, beidelite, nontronite, stevensite, vermiculite, hallosite, volkonskoite, suconite, magadite et kenyalite.

5. L'article ayant les propriétés de barrière selon la revendication 1, où le rapport en poids de la résine ayant des propriétés de barrière et de l'argile intercalée dans le nanocomposite est compris entre 58,0:42,0 et 99,9:0,1.

6. L'article ayant les propriétés de barrière selon la revendication 1, où le l'argile intercalée comprend 1 à 45% en poids d'une matière organique.

7. L'article ayant les propriétés de barrière selon la revendication 6, où la matière organique a au moins un groupe fonctionnel sélectionné parmi le groupe constitué d'ammomium primaire à ammonium quaternaire, phosphonium, maléate, succinate, acrylate, hydrogène benzylique, oxazoline et diméthyl distéaryl ammonium.

8. L'article ayant les propriétés de barrière selon la revendication 1, où le polyamide est le nylon 4.6, nylon 6, nylon 6.6, nylon 6.10, nylon 7, nylon 8, nylon 9, nylon 11, nylon 12, nylon 46, MXD6, polyamide amorphe, un polyamide copolymérisé contenant au moins deux de ceux-ci ou un mélange d'au moins deux de ceux-ci.

9. L'article ayant les propriétés de barrière selon la revendication 1, où l'agent de compatibilité est un ou plusieurs composés sélectionnés parmi le groupe constitué d'un copolymère d'éthylène-anhydride d'éthylène-acide acrylique, un copolymère d'éthylène-acrylate d'éthyle, un copolymère d'éthylène-acrylate d'alkyle-acide acrylique, un polyéthylène haute densité modifié par un anhydride maléique (greffe), un polypropylène modifié par un anhydride maléique (greffe), un polyéthylène basse densité linéaire modifié par un anhydride maléique (greffe), un copolymère d'éthylène-(méth)acrylate d'alkyle-acide (méth)acrylique, un copolymère d'éthylène-acrylate de butyle, un copolymère d'éthylcne-acétate de vinyle et un copolymère d'éthylène-acétate de vinyle modifié par un anhydride maléique (greffe).

10. L'article ayant les propriétés de barrière selon la revendication 1, où le nanocomposite maintient sa morphologie totalement exfoliée, partiellement exfoliée, intercalée ou partiellement intercalée même moulé.

11. L'article ayant les propriétés de barrière selon la revendication 1, où le nanocomposite est préparé par des procédés de plastification et de mélange au point de fusion ou plus élevé à l'aide d'une extrudeuse à simple vis, une extrudeuse à co-rotation à vis jumelle, une extrudeuse à contre-rotation à vis jumelle, une boudineuse continue, une extrudeuse à engrenage planétaire ou une boudineuse discontinue.

12. L'article ayant les propriétés de barrière selon la revendication 1, préparé par moulage par soufflage, moulage par extrusion, moulage par compression ou moulage par injection.

13. L'article ayant les propriétés de barrière selon la revendication 1, ayant une forme à couche simple ou une forme à couches multiples.

14. L'article ayant les propriétés de barrière selon la revendication 1, où le nanocomposite est dispersé dans la résine polyoléfine sous une forme à lamelles multiples dans laquelle 2 à 300 lamelles sont inclues en unité de longueur de 1 mm, l'épaisseur de la lamelle est comprise entre 0,001 et 200 µm, et un rapport d'aspect moyen, ϕn, est compris entre 10 et 1000.

15. L'article ayant les propriétés de barrière selon la revendication 8, où la température de transition vitreuse du polyamide amorphe est d'environ 70 à 170°C.

16. L'article ayant les propriétés de barrière selon la revendication 8, où le polyamide amorphe est sélectionné parmi le groupe constitué de terpolymère d'hexaméthylènediamine isophtalamide, hexaméthylène diamine isophtalamide/téréphtalamide ayant un rapport acide isophtalique/acide téréphtalique de 99/1 à 60/40, un mélange de 2,2,4- et 2.4,4-triméthylhexaméthylènediamine-téréphtalamide et un copolymère d'hexaméthylènediamine ou de 2-méthylpentaméthylènediamine et d'acide téréphtalique, d'acide isophtalique, ou un mélange de ceux-ci.

17. L'article ayant les propriétés de barrière selon la revendication 16, où le polyamide amorphe est le terpolymère d'hexaméthylènediamino-isophtatamide/téréphtalamide ayant un rapport acide isophtalique/acide téréphtalique de 70:30.

18. L'article ayant les propriétés de barrière selon la revendication 9, où le polyéthylène haute densité modifié par un anhydride maléique (greffe), le polyéthylène basse densité linéaire modifié par un anhydride maléique (greffe), le polypropylène modifié par un anhydride maléique (greffe) ou le copolymère d'éthylène-acétate de vinyle modifié par un anhydride maléique (greffe) comprend des ramifications ayant 0,1 à 10 parties en poids d'anhydride maléique pour 100 parties en poids de la chaîne principale.
